# EUROPÄISCHE PATENTSCHRIFT

(11) **EP 1 012 021 B1**
(45) Veröffentlichungstag und Bekanntmachung des Hinweises auf die Patenterteilung: **29.05.2002**
(21) Anmeldenummer: 98903008.5
(22) Anmeldetag: 15.01.1998
(51) Int. Cl.: B61F 5/22

(54) **NEIGUNGSSTEUERUNG FÜR SCHIENENFAHRZEUGE**
CAMBER CONTROL FOR RAIL VEHICLES
COMMANDE D'INCLINAISON POUR VEHICULE FERROVIAIRE

(30) Priorität: 30.01.1997 DE 19703322
(43) Veröffentlichungstag der Anmeldung: 28.06.2000
(73) Patentinhaber: DaimlerChrysler Rail Systems GmbH, 13627 Berlin (DE); ESW-EXTEL SYSTEMS WEDEL Gesellschaft für Ausrüstung mbH, 22876 Wedel (DE)
(72) Erfinder: BENKER, Thomas, 91257 Pegnitz (DE); METZNER, Bernd, 25421 Pinneberg (DE)
(74) Vertreter: Cohausz & Florack Patentanwälte
(86) Internationale Anmeldenummer: EP9800204
(87) Internationale Veröffentlichungsnummer: WO9833691

(56) Entgegenhaltungen:
- EP-A- 0 557 893
- FR-A- 2 073 005
- FR-A- 2 407 510

## Beschreibung

Die Erfindung betrifft eine Neigungssteuervorrichtung gemäß dem Oberbegriff des ersten Anspruchs, sowie ein Verfahren zur Durchführung einer Neigungsteuerung.

Bei einer bekannten Neigungssteuerung dieser Art (DE 37 27 768 C1) ist zur Erzeugung eines Ansteuersignales für die gleisbogenabhängige Neigung eines Schienenfahrzeug-Wagenkastens neben einem Querbeschleunigungssensor ein Kreisel zur Erfassung der Drehgeschwindigkeit des Wagenkastens und ein Geschwindigkeitssensor vorgesehen. Die Ausgangssignale des Querbeschleunigungssensors und des Drehwinkelsensors sind gleichartigen elektrischen Tiefpässen mit einer niedrigen Grenzfrequenz zugeführt, um aus diesen Ausgangssignalen die von Störschwingungen überlagerten Grundsignale auszufiltern. Das gefilterte drehwinkelabhängige Ausgangssignal des Kreisels wird mit einem von der Fahrzeug-Geschwindigkeit und der Erdbeschleunigung abhängigen Signal multipliziert und anschließend zusammen mit dem gefilterten Signal des Querbeschleunigungssenors als Summensignal einer Neigungssteuereinrichtung zugeführt, die abhängig von den Eingangsgrößen die Neigung des Wagenkastens um seine Längsachse gegenüber einer den Wagenkasten tragenden Laufwerks- oder Drehgestellanordnung bewerkstelligt. Die Tiefpaßfilter weisen dabei eine Grenzfrequenz von 2 Hz auf. Diese niedrige Grenzfrequenz hat eine unerwünschte elektrische Zeitverzögerung des Ausgangssignals zur Folge. Um diesen Nachteil auszugleichen, der zu einer den Fahrkomfort nachteilig beeinflussenden, verzögerten Neigung des Wagenkastens führen würde, wird dem vom Tiefpaß gefilterten, an sich die Neigung des Wagenkastens bestimmenden Ausgangssignal ein durch mehrfache Multiplikation und Addition gewonnenes Korrektursignal zugeführt, das aus der Drehgeschwindigkeit des Wagenkastens um seine Hochachse und dessen Fahrgeschwindigkeit errechnet wird. Der technische Aufwand dafür und damit auch die Fehlermöglichkeit ist relativ groß. Hinzu kommt eine im Vergleich zur Änderungsgeschwindigkeit der Querbeschleunigung hohe Grenzfrequenz der Tiefpaßfilter.

Der Erfindung liegt die Aufgabe zugrunde, bei einer Neigungssteuerung gemäß dem Oberbegriff des ersten Anspruchs Maßnahmen zu treffen, durch die bei vereinfachtem Schaltungsaufbau eine verzögerungsarme Ansteuerung der Neigungssteuereinrichtung erreicht wird.

Die Lösung dieser Aufgabe erfolgt gemäß der Erfindung durch die kennzeichnenden Merkmale des ersten Anspruchs.

Vorteilhafte Ausgestaltungen sind in den weiteren Ansprüchen angegeben.

Bei einem Aufbau einer Neigungssteuerung gemäß der Erfindung wird zur Steuerung einer die Neigung des Wagenkasten bewirkenden Stellgliedanordnung einer Neigungssteuereinrichtung lediglich das Ausgangssignal eines Querbeschleunigungssensors herangezogen, das in seiner durch Störschwingungen verrauschten Ursprungsform ungefiltert einem Kennlinienglied zugeführt wird. Im Kennlinienglied ist zumindest eine Kennlinie festgelegt, entsprechend welcher zu einem bestimmten Eingangssignalwert ein zugeordneter Ausgangssignalwert ausgegeben wird. Dabei erfolgt eine Bewertung des Eingangsignals in der Weise, daß nur ein mittlerer Bereich für die Steuerung der Wagenkasten-Neigung ausgenutzt wird. Das Kennlinienglied kann insbesondere auf digitaler Basis aufgebaut sein, wobei in einem Speicher abhängig von der Größe des Querbeschleunigungssensor-Ausgangssignals zugehörige Ausgangssignalwerte abgelegt sind. Die Kennlinie des Kennlinienglieds hat einen unbewerteten Anfangsbereich, in dem das Eingangssignal zu keinem Ausgangssignal führt, d.h. die Querbeschleunigung im Wagenkasten ändert sich wie die Querbeschleunigung in Gleisebene. Im anschließenden bewerteten mittleren Bereich wird das Kennlinienglied als beliebig monoton steigende Funktion definiert. Insbesondere werden abschnittsweise linear ansteigende Kurventeile gewählt. Wenigstens ein Kurventeil muß dabei so steil sein, daß die Querbeschleunigung im Wagenkasten für diesen Kurvenbereich konstant bleibt. Dadurch kann die Laufzeit des nachgeschalteten Tiefpassfilter zumindest teilweise kompensiert werden. Ab einem vorgegebenen oberen Beschleunigungswert liefert das Kennlinienglied wieder einen unbewerteten konstanten, vom Eingangssignal unabhängigen Ausgangssignalwert, so daß sich die Querbeschleunigung im fahrenden Wagenkasten mangels weiterer Neigung des Wagenkastens wieder wie die Querbeschleunigung in Gleisebene ändert. Der in Gleisebene erfaßte Anfangsbereich reicht vorzugsweise etwa bis 0,4 m/s², der bewertete mittlere Bereich etwa von 0,4 bis 1,6 m/s². Das Ausgangssignal des Kennliniengliedes kann wahlweise ein umgesetzer Querbeschleunigungswert oder ein den Sollneigewinkel des Wagenkasten bestimmender Wert sein. Dabei kann dieses Tiefpaßfilter eine Grenzfrequenz von weniger als 1 Hz aufweisen. Vorzugsweise wird diese Grenzfrequenz auf etwa 0,2 Hz eingestellt. Trotz der dadurch erhöhten Laufzeit des Filters wird infolge der Bewertungsfunktion des Kennliniengliedes eine schnell reagierende Ansteuerung der Stellgliedanordnung erzielt, weil die Laufzeit des Tiefpaßfilters zumindest teilweise kompensiert wird. Die niedrige Grenzfrequenz des Tiefpaßfilters führt zu einer weichen Neigungsänderung am Wagenkasten und zu einem gerundeten Kennlinien-Übergang jeweils am Beginn und am Ende des bewerteten Kennlinienbereichs. Durch Wegfall weiterer Sensoren und zugehöriger Filter- und Recheneinheiten wird eine einfache, störungsunanfällige und mit geringem technischen Aufwand billig zu realisierende Neigungssteuerung erreicht.
Die zulässige Querbeschleunigung in Gleisebene ist vorliegend auf Werte zwischen 0 und 2 m/s² beschränkt. Die Querbeschleunigung im Wagenkasten ändert sich dabei im Bereich bis zu etwa 0,4 m/s² gleichlaufend wie in Gleisebene, währenend sie im mittleren Abschnitt durch entsprechende Aktivierung der Stellglieder der Neigungssteuerung etwa konstant bei 0,4 m/s² gehalten wird, um im Bereich über 1,6 m/s² wieder gleichlaufend bis auf vorliegend etwa 0,8 m/s² anzusteigen.

Eine Anpassung des Steuerverhaltens an unterschiedliche Schienenfahrzeugtypen läßt sich noch dadurch erreichen, daß im Kennlinienglied mehrere Kennlinienfelder abgelegt werden, die bei der Installation am Schienenfahrzeug oder bei einem Wunsch nach Änderung der Neigungscharakteristik wahlweise abgerufen werden können. In einem digitalen Kennlinienglied kann dabei einem Eingangssignalverlauf je Kennlinie eine eigene Speicherzellengruppe mit festen Daten zugeordnet sein oder die Datenwerte in einer Speicherzellengruppe je nach gefordertem Kennlinienverlauf geändert werden.

Die Erfindung ist nachfolgend anhand der Zeichnungen eines Ausführungsbeispiels näher erläutert.

Es zeigen:
- FIG. 1: ein Blockschaltbild einer Neigungssteuerung für einen Wagenkasten eines Schienenfahrzeugs,
- FIG. 2a: eine Bewertungsfunktion des Kennliniengliedes,
- FIG. 2b: eine Kurvendarstellung des zeitlichen Verlaufs der Querbeschleunigung in Gleisebene beim Bogeneinlauf,
- FIG. 2c: eine Kurvendarstellung des zeitlichen Verlaufs des Sollneigewinkels mit und ohne Kennlinienglied und
- FIG. 3: eine gemessene Kurve der im Wagenkasten spürbaren Querbeschleunigung.

Ein zu steuerndes Schienenfahrzeug weist einen Wagenkasten auf, der auf mindestens zwei Laufwerken oder Drehgestellen über eine Neigungssteuereinrichtung um seine Längsachse geneigt werden kann, wobei steuerbare mechanische Stellglieder in Form von elektromotorischen oder hydraulischen Aktoren zwischen Wagenkasten und Laufwerk/Drehgestellen vorgesehen sind. Eine Steuerung der Neigung des Wagenkastens ist dabei dann erforderlich, wenn ein Schienenbogen zu durchlaufen ist und dient einem komfortablen Betrieb des Schienenfahrzeugs ohne unangenehme Beeinflussung des Benutzers durch überhöhte Querkräfte. Zur Steuerung der hierfür erforderlichen Stellglieder ist zumindest an einem Fahrwerk/ Drehgestell bzw. einer Radachse oder auch am Fahrwerks- oder Drehgestellrahmen ein Sensor 1 vorgesehen, der auf Querbeschleunigungskräfte reagiert und in Abhängigkeit davon ein elektrisches Signal generiert. Aufgrund von Gleisbogenfehlern, vom Fahrzeug selbst erzeugten Schwingungen und dgl. ist das beschleunigungsabhängige Signal als Grundsollwertsignal für die Steuerung des Neigungswinkels durch entsprechende überlagerte, wesentlich höherfrequente Störschwingungen verrauscht. Dieses verrauschte Signal wird als Eingangssignal ungefiltert einem Kennlinienglied 2 zugeführt, das abhängig von der Größe seines Eingangssignals aqe ein unproportionales Ausgangssignal aqa liefert, welches nicht nur vom idealen Grundsollwertsignal, sondern auch von den überlagerten Störschwingungen abhängig ist.

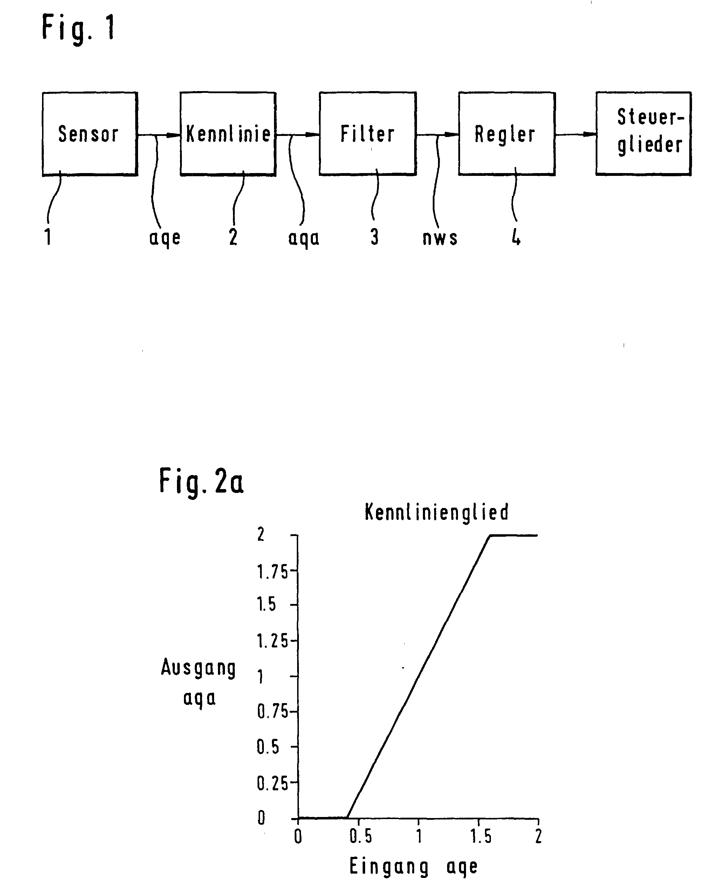

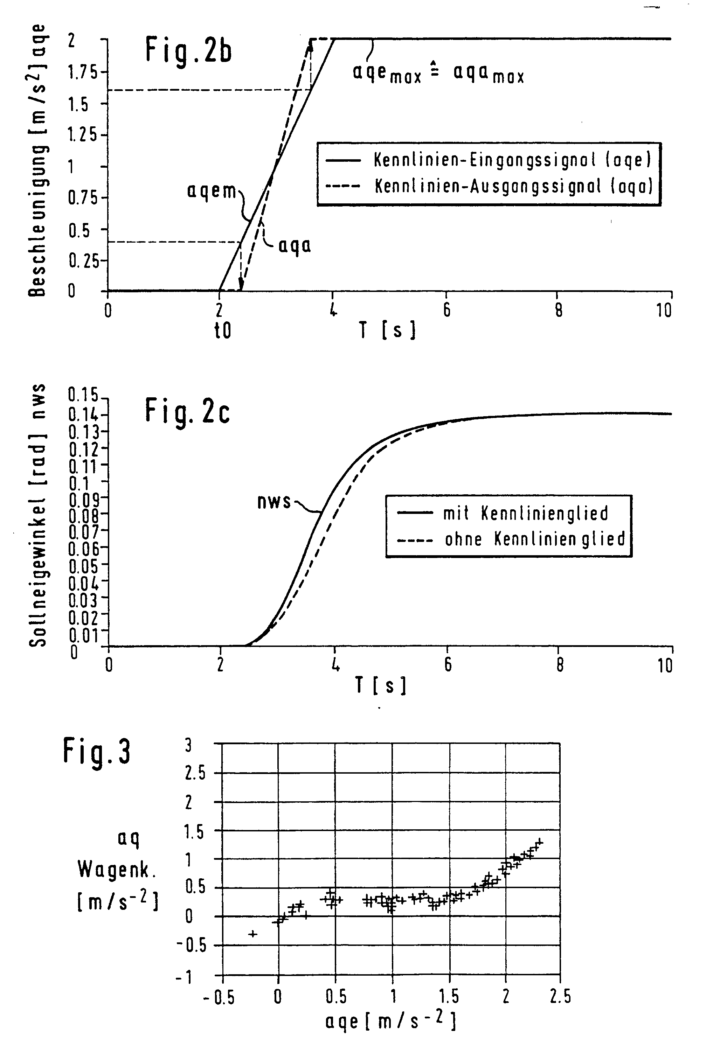

In FIG 2b ist über der Zeit der Verlauf der quasistatischen Querbeschleunigung in Gleisebene aqe bei Bogeneinlauf eines Wagens in voller Linie dargestellt. Dieses Beschleunigungssignal aqe steigt dabei ab dem Einlaufen des Wagens in den anfänglichen übergangsbogen eines Gleises linear von 0 m/s² im Zeitpunkt t0 (vorliegend mit Sekunde 2 angenommen) in einem mittleren Abschnitt aqem an und bleibt im anschließenden Vollbogen konstant bis zum maximal zulässigen Wert von 2 m/s² . Nach der Bewertung mit dem Kennlinienglied 2 nach FIG 2a ergibt sich ein zugehöriger Ausgangssignal-Verlauf aqa, wie er in FIG 2b in gestrichelter Linie dargestellt ist. Es stellt einen umgewandelten Beschleunigungswert dar, das einen Neigungswinkel-Grundwert enthält. Dieses Ausgangssignal aqa bleibt demnach solange auf dem Wert Null,bis das Eingangssignal den Wert 0,4 m/s² übersteigt. Es erreicht jedoch seinen Maximal-Wert für die Neigung des Wagenkasten bereits bei einem Eingangssignal von 1,6 m/s². Dieser Kurvenbereich aqa kann sich dabei wahlweise aus verschiedenen Kurvensegmenten zusammensetzen. Das so erzeugte Ausgangssignal aqa erreicht seinen Höchstwert somit vor Erreichen des Schienen-Vollbogens, in dem die Beschleunigung in Gleisebene aqe konstant ist und vorliegend 2 m/s² erreicht. Eine weitere gesteuerte Neigung des Wagenkasten ab 1,6 m/s² erfolgt dann nicht mehr, so daß Beschleunigungswerte in Gleisebene über 1,6 m/s² eine entsprechende, fühlbare Steigerung der Querbeschleunigung im Wagenkasten zur Folge haben (FIG 3).

FIG 2a zeigt eine im Kennlinienglied 2 abgelegte Bewertungsfunktion. Der Anfangsbereich (kein Ausgangssignal) reicht hier von 0 m/s² bis 0,4 m/s². Im Bereich aqem von 0,4 m/s² bis 1,6 m/s² ist der lineare Anstieg so gewählt, daß das für die Neigungssteuerung relevante Ausgangssignal aqa Beschleunigungswerten zwischen 0 m/s² und 2 m/s² entspricht. Im anschließenden Endbereich aqemax des Eingangssignals aqe für Beschleunigungswerte in Gleisebene über 1,6 m/s² bleibt das für die Neigung des Wagenkasten steuerungsrelevante Ausgangssignal aqa konstant und unabhängig vom Eingangssignal entsprechend 2 m/s².

Das Ausgangssignal aqa des Kennliniengliedes 2 wird einem Tiefpassfilter 3 zugeführt. Auf Grund des Schleppfehlers bzw der Laufzeit des Tiefpassfilters 3 wird das in FIG 2c als Vollinie dargestellte Filter-Ausgangssignal nsw erzeugt, das dem Neigewinkel-Sollwert entspricht, um den der Wagenkasten bei Kurvenfahrt abhängig von der auftretenden Querbeschleunigung aqe mittels der zugehörigen Neigesteuereinrichtung tatsächlich im Bereich zwischen 0,4 und 1,6 m/s² geneigt wird. Die gestrichelte Linie in FIG 2c zeigt dagegen den Verlauf des Sollneigewinkels, auf den der Wagenkasten ohne Verwendung des Kennliniengliedes 2 gesteuert würde. Die Verwendung des Kennliniengliedes 2 führt demnach zu einem steileren Anstieg des Sollneigewinkels nsw entsprechend dem Ausgangssignal aqa im mittleren, ansteigenden Kurventeil des Eingangssignals aqe zwischen den wählbaren Werten 0,4 m/s² bis 1,6 m/s². Es ergibt sich dadurch also ein zeitlicher Vorsprung des Neigewinkelsollwertsignals nsw.

In FIG. 3 sind Meßwerte aus einer Versuchsfahrt mit einem mit der erfindungsgemäßen Neigungssteuerung ausgerüsteten Schienenfahrzeug aufgezeichnet. Dabei sind die im Wagenkasten gemessenen quasistatischen Beschleunigungswerte über den an der Achse eines Schienenfahrzeug-Fahrwerks oder -Drehgestells (entsprechend der Querbeschleunigung in Gleisebene) gemessenen quasistatischen Querbeschleunigungswerten aqe aufgetragen. Der Kurvenverlauf zeigt dabei einen Anstieg der Beschleunigungswerte im Wagenkasten bei Gleisbogenfahrt zunächst bis auf Werte von etwa 0,4 m/s², wonach der Querbeschleunigungswert im Wagenkasten infolge aktiv gesteuerter Neigung des Wagenkastens bis zu Beschleunigungswerten am Drehgestell bis zu etwa 1,6 m/s² annähernd konstant bleibt und anschließend kontinuierlich zunehmend mit zunehmender Querbeschleunigung aqe ansteigt.Einem Passagier wird somit bei Bogenfahrt in Übereinstimmung mit der optischen Wahrnehmung das Gefühl vermittelt, daß tatsächlich eine Kurve durchfahren wird, ohne jedoch die realen Fliehkräfte in voller Höhe zu spüren.

## Patentansprüche

1. Neigungssteuervorrichtung für den Wagenkasten eines Schienenfahrzeugs mit einem Querbeschleunigungssensor (1) und einer davon gesteuerten Neigungssteuereinrichtung zur Neigung des Wagenkastens um seine Längsachse gegenüber einem den Wagenkasten tragenden Laufwerk oder Drehgestell, und mit einem in den Signalweg zwischen Querbeschleunigungssensor (1) und Neigungssteuereinrichtung geschalteten Tiefpaßfilter (3), **dadurch gekennzeichnet, daß** in den Signalweg zwischen Querbeschleunigungssensor (1) und Tiefpaßfilter (3) ein Kennlinienglied (2) eingeschaltet ist, dessen Ausgangssignal zumindest in einem mittleren Abschnitt (aqem) eines vorgegebenen Meßbereichs der zu erfassenden Querbeschleunigungswerte (aqe) so gewählt ist, daß die Querbeschleunigung im Wagenkasten für diesen Abschnitt (aqem) etwa annähernd konstant ist.

2. Neigungssteuervorrichtung nach Anspruch 1 , **dadurch gekennzeichnet, daß** der mittlere Abschnitt (aqem) für die in der Gleisebene herrschenden Querbeschleunigungswerte zwischen etwa 0,4 bis 1,6 m/s² liegt.

3. Neigungssteuervorrichtung nach Anspruch 1 oder 2, **dadurch gekennzeichnet, daß** die Neigungssteuereinrichtung den Wagenkasten bei Querbeschleunigungswerten (aqe) zwischen 0,4 m/s² und 1,6 m/s² nur soweit neigt, daß im Wagenkasten eine Querbeschleunigung von etwa 0,4 m/s² aufrechterhalten wird.

4. Neigungssteuervorrichtung nach wenigstens einem der Ansprüche 1 bis 3, **dadurch gekennzeichnet, daß** im Kennlinienglied (2) mehrere unterschiedliche Kennlinienfelder abgelegt sind, die wahlweise abrufbar sind.

5. Neigungssteuervorrichtung nach wenigstens einem der Ansprüche 1 bis 4, **dadurch gekennzeichnet, daß** die Grenzfrequenz des Tiefpaßfilters (3) kleiner als 1 Hz ist.

6. Neigungssteuervorrichtung nach wenigstens einem der Ansprüche 1 bis 5, **dadurch gekennzeichnet, daß** die Grenzfrequenz des Tiefpaßfilters (3) etwa 0,2 Hz beträgt.

7. Verfahren zur Durchführung einer Neigungssteuerung mit einer Neigungssteuervorrichtung nach wenigstens einem der Ansprüche 1 bis 6, **dadurch gekennzeichnet, daß** die Neigungssteuervorrichtung nur bei Querbeschleunigungswerten in der Gleisebene zwischen 0,4 m/s² und 1,6 m/s² aktiviert wird.

8. Verfahren nach Anspruch 7, **dadurch gekennzeichnet, daß** die Neigungssteuervorrichtung derart gesteuert wird, daß die Querbeschleunigung im Wagenkasten annähernd konstant gehalten wird.

## Claims

1. Tilt control system for the body of a rail vehicle with a lateral acceleration sensor and a tilt control device controlled thereby for tilting the vehicle body about its longitudinal axis relative to a running gear or bogie carrying the vehicle body and with a low-pass filter installed in the signal path between lateral acceleration sensor and tilt control device, **characterized in that** a characteristic element (2) is installed in the signal path between lateral acceleration sensor (1) and low-pass filter (3), the output signal of which is, at least in a middle section (aqem) of a preset measuring range of the acceleration values (aqe) to be detected, selected to keep the lateral acceleration in the vehicle body approximately constant for the section (aqem) in question.

2. Tilt control system according to claim 1, **characterized in that** the middle section (aqem) for the lateral acceleration values prevailing at track level lies between approximately 0.4 and 1.6 m/s².

3. Tilt control system according to claim 1 or 2, **characterized in that** the tilt control device tilts the vehicle body at lateral acceleration values (aqe) between 0.4 and 1.6 m/s² only far enough to maintain a lateral acceleration of approximately 0.4 m/s² in the vehicle body.

4. Tilt control system according to at least one of claims 1 to 3, **characterized in that** several families of characteristics are stored in the characteristic element (2) for optional call-up.

5. Tilt control system according to at least one of claims 1 to 4, **characterized in that** the cutoff frequency of the low-pass filter (3) is less than 1 Hz.

6. Tilt control system according to at least one of claims 1 to 5, **characterized in that** the cutoff frequency of the low-pass filter (3) is approximately 0.2 Hz.

7. Method for the implementation of a tilt control system according to at least of the claims 1 to 6, **characterized in that** the tilt control device is activated only at track level lateral acceleration values between 0.4 m/s² and 1.6 m/s².

8. Method according to claim 7, **characterized in that** the tilt control device is so controlled that the lateral acceleration in the vehicle body is kept approximately constant.

## Revendications

1. Dispositif de commande d'inclinaison pour le caisson de wagon d'un véhicule ferroviaire avec un capteur d'accélération transversale (1) et une installation de commande d'inclinaison commandée par celui-ci pour l'inclinaison du caisson tournant autour de son axe longitudinal par rapport à un organe de roulement ou bogie supportant le caisson de wagon, et avec un filtre passe-bas (3) inséré entre la voie du signal entre le capteur d'accélération transversale (1) et l'installation de commande d'inclinaison, **caractérisé en ce que**, dans la voie du signal entre le capteur d'accélération transversale (1) et le filtre passe-bas (3), un élément caractéristique (2) est branché, dont le signal de sortie est choisi, du moins dans une section centrale (aqem) d'une zone de mesure prédéfinie des valeurs d'accélération transversales (aqe) à déterminer de manière à ce que l'accélération transversale dans le caisson de wagon soit pratiquement constante pour cette section (aqem).

2. Dispositif de commande d'inclinaison selon la revendication 1, **caractérisé en ce que** la section centrale (aqem), pour les valeurs d'accélération transversale régnant dans le plan des rails est approximativement de 0,4 à 1,6 m/s².

3. Dispositif de commande d'inclinaison selon la revendication 1 ou 2, **caractérisé en ce que** l'installation de commande d'inclinaison n'incline le caisson de wagon, à des valeurs d'accélération transversale (aqe) entre 0,4 m/s² et 1,6 m/s², que tant que, dans le caisson du wagon, une accélération transversale d'environ 0,4 m/s² est maintenue.

4. Dispositif de commande d'inclinaison selon au moins une des revendications 1 à 3, **caractérisé en ce que**, dans l'élément caractéristique (2), plusieurs champs caractéristiques différents, qui peuvent être appelés au choix, sont installés.

5. Dispositif de commande d'inclinaison selon au moins une des revendications 1 à 4, **caractérisé en ce que** la fréquence limite du filtre passe-bas (3) est inférieure à 1 Hz.

6. Dispositif de commande d'inclinaison selon au moins une des revendications 1 à 5, **caractérisé en ce que** la fréquence limite du filtre passe-bas (3) est d'environ 0,2 Hz.

7. Procédé pour la réalisation d'une commande d'inclinaison avec un dispositif de commande d'inclinaison selon au moins une des revendications 1 à 6, **caractérisé en ce que** le dispositif de commande n'est activé que lorsque les valeurs d'accélération transversales dans le plan des rails sont situées entre 0,4 m/s² et 1,6 m/s².

8. Procédé selon la revendication 7, **caractérisé en ce que** le dispositif de commande d'inclinaison est commandé de manière à ce que l'accélération transversale dans le caisson de wagon soit maintenue pratiquement constante.
